Europäisches Patentamt

(19) European Patent Office

Office européen des brevets

(11) Publication number: **0 002 359**
**B1**

(12) **EUROPEAN PATENT SPECIFICATION**

(45) Date of publication of patent specification: **12.05.82**     (51) Int. Cl.³: **B 60 Q 11/00**

(21) Application number: **78300690.1**

(22) Date of filing: **29.11.78**

(54) Direction indicating apparatus for vehicles.

(30) Priority: **01.12.77 JP 144691/77**

(43) Date of publication of application:
**13.06.79 Bulletin 79/12**

(45) Publication of the grant of the patent:
**12.05.82 Bulletin 82/19**

(84) Designated Contracting States:
**DE FR GB**

(56) References cited:
**FR - A - 2 090 372**
**US - A - 3 858 177**
**US - A - 3 955 174**

**INGENIEURS DE L'AUTOMOBILE, June/**
**July 1975, No. 6, 7, Boulogne.**
**ZANTEN et al. "Circuit intégré pour cignotant",**
**pages 187 to 192.**

(73) Proprietor: **NIPPONDENSO CO., LTD.**
**1, 1-chome Showa-cho**
**Kariya-shi Aichi-ken (JP)**

(72) Inventor: **Tiaki, Mizuno**
**1236-144, Kamiikecho-2-chome**
**Toyota-shi Aichi-ken (JP)**

(74) Representative: **Hartley, David et al,**
**c/o Withers & Rogers 4 Dyer's Buildings Holborn**
**London, EC1N 2JT (GB)**

Courier Press, Leamington Spa, England.

# Direction indicating apparatus for vehicles

The present invention relates to apparatus for controlling the flashing of vehicle direction indicator lamps and particularly to an improvement in the generation of control pulses for this purpose.

It is well known to energize a group of front, rear and side direction indicator lamps causing the lamps to flash periodically as required to indicate the direction in which a vehicle is to be turned. It is also known that the frequency of the pulses is increased upon disconnection or other malfunction of the front or rear indicator lamp to increase flashing frequency of the remaining directional lamps.

In one known system described in US—A—3.955.174, the indicator lamps do not begin to flash simultaneously with closure of the selector switch, a normally open relay being closed following closure of the selector switch after a delay determined by the time required for a capacitor to discharge. This is considered disadvantageous. Also, an oscillator controlling flashing of the selected indicator lamp group is responsive only to the output of the selector switch. In the event of a lamp failure, the lamps are held energized by a comparator and flash prevention circuit irrespective of operation of the oscillator.

Another system is disclosed in US—A—3,858,177, in which front and rear indicator lamps are connected in parallel with each other and in series with a battery, a current detecting resistor, a relay and a direction selector switch, an electronic circuit including a flip-flop being provided to generate periodic pulses applied to the relay. The electronic circuit is connected to the selector switch so that, when the flip-flop is rendered operative in response to closure of the selector switch, the periodic pulses are generated.

This kind of electric connection between the electronic circuit and the selector switch, is likely to cause erroneous generation of pulses when the flip-flop is accidentally rendered operative or inoperative in response to high or low frequency electrical noise induced in the necessarily long conductors extending from the battery to the indicator lamps. In an attempt to avoid this problem it has been suggested to connect capacitors at input to the flip-flop stages or the like. It is however difficult to form capacitors within a semiconductor integrated circuit and to connect capacitors outside the integrated circuit is expensive, so that it is desirable to use as few capacitors as possible.

According to this invention we propose direction indicating apparatus for vehicles comprising two indicator lamp groups each being selectively connectable with an electrical power source via a normally open switch, by a selector switch, a detector for producing a detecting output signal in proportion to the current flowing to a selected lamp group, a comparator producing a comparison output signal when the detection output signal exceeds a predetermined reference signal lower than the detection output signal produced in the absence of malfunction in the selected lamp group, and a switch control operable in response to a control signal indicative of closure of the selector switch, periodically to close the normally open switch characterised in that the said control signal is the output signal of a logic circuit operable in response to the comparison output signal and a selector switch output signal.

In a preferred embodiment, the current detector comprises a resistor, the normally-open switch is a relay and the switch control comprises a pulse generator. The logic circuit which is responsive to the voltages appearing across a current detecting resistor and at the junction between the normally-open relay and the selector switch, enables the pulse generator to generate periodic pulses when the selector switch is closed, this arrangement serving to avoid erroneous flashing of the indicator lamps. The relay when energized by the periodic pulses functions additionally as a buzzer to warn of malfunctions in both front and rear indicator lamps. To this end, the comparator responsive to the voltage appearing across the current detecting resistor is provided to detect the disconnections of both front and rear directional lamps.

The flashing frequency of the indicator lamps can be increased to warn of the disconnection or other malfunction of either front or rear directional lamp by means of a further comparator responsive to the voltage across the current detecting resistor and arranged to increase the frequency of the pulse generator.

Embodiments of the invention will now be described by way of example with reference to the accompanying drawings in which:

Fig. 1 is a block diagram illustrating a first embodiment of direction indicating apparatus for vehicles;

Fig. 2 is a circuit diagram of the embodiment of Figure 1;

Fig. 3 is a graph illustrating the relationship between the voltages across a battery and a current detecting resistor in the embodiment of Figures 1 and 2;

Fig. 4 is a circuit diagram of a second embodiment; and

Fig. 5 is a graph illustrating the relationship between the voltages across a battery and a current detecting resistor in the second embodiment.

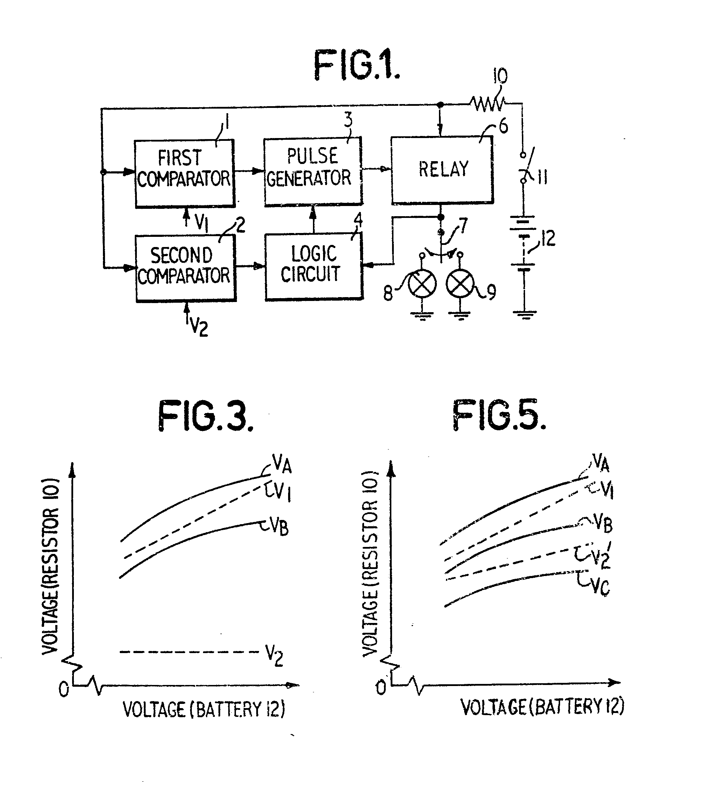

Referring first to Fig. 1, two direction indicator lamp groups 8 and 9 are shown connected in series with a relay 6, a current detecting resistor 10 having low resistance, a battery switch 11 and a storage battery 12. The direction indicator lamp groups 8 and 9 are mounted on respective left and right portions of an automotive vehicle, for example. As is known well, either one of direction indicator lamp groups 8 and 9 is energized upon closure of the selector switch 7 by the battery 12 through the battery switch 11, the resistor 10 and the relay 6. The relay 6 is in turn, energized periodically during the closure of the selector switch 7 to cause one of the lamp groups 8 and 9 to flash in order to indicate in which direction the vehicle is to turn.

Energization of the relay 6 is controlled by an electronic circuit comprising a first comparator, 1, a second comparator 2, a pulse generator 3 and a logic circuit 4. The first and second comparators 1 and 2 are connected to the resistor 10 for respectively detecting lamp malfunction for example due to a disconnection in the lamp group, and closure of the selector switch, in response to the signal developed by the resistor 10. First and second reference signals $V_1$ and $V_2$ are applied to the first and second comparators 1 and 2, respectively, so that the signal applied from the resistor 10 is compared therewith. The logic circuit 4 is connected to the second comparator 2 and to the junction between the relay 6 and the selector switch 7 to detect closure of the selector switch 7. The pulse generator 3 is connected to the logic circuit 4 to generate periodic pulses in response to the logic output signal indicative of the closure of the selector switch 7 and is connected to the first comparator 1 to increase the frequency of the periodic pulses in response to the comparison output signal indicative of a disconnection in the lamp group. The pulse generator 3 is connected to the relay 6 which energizes the lamp group 8 or 9 in response to the periodic pulses.

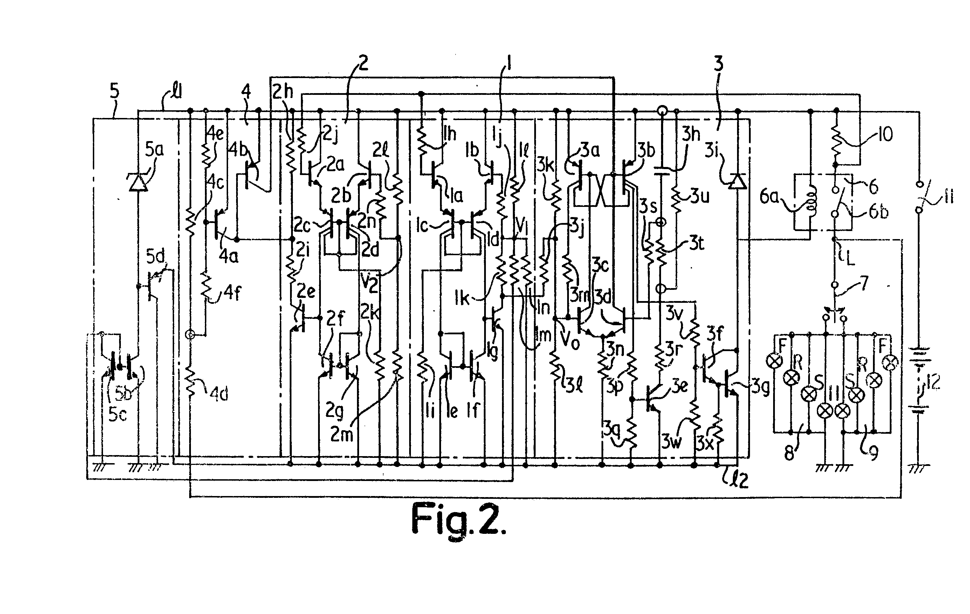

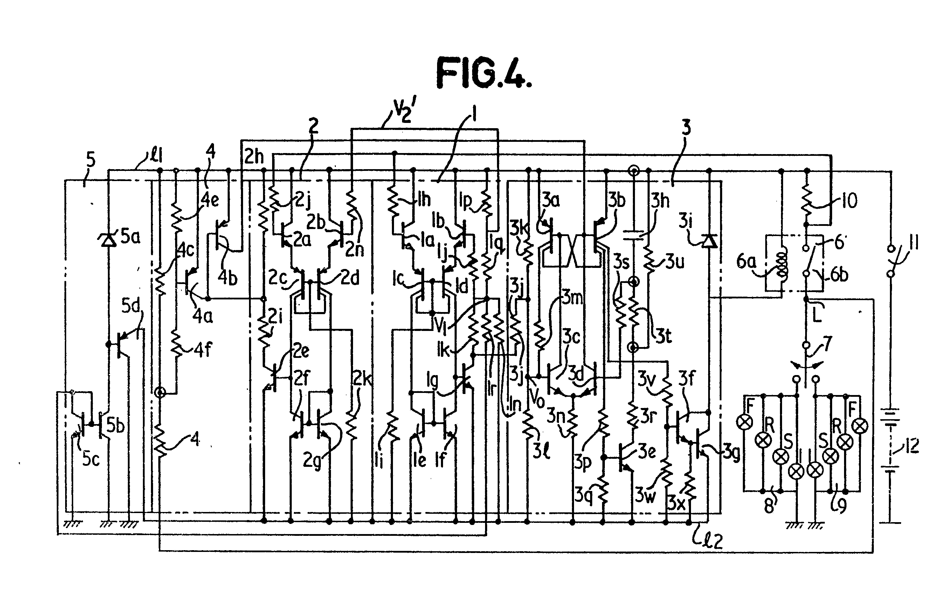

Referring next to Fig. 2, it should be noticed that the relay 6 having a coil 6a and a switch 6b is a normally-open (i.e. normally-nonconductive) relay, so that the resistor 10 and the selector switch 7 are normally disconnected. It should be noticed further that each of the lamp groups 8 and 9 comprises front, rear, side and interior direction indicator lamps which are connected in parallel with each other and respectively denoted by letters F, R, S and I. Lamps F, R and S are mounted externally respectively on the front, rear and side outside of the vehicle, whereas the directional lamp I is mounted internally. The front and rear lamps F and R (23 watts) consume more power than the side lamp S (18 watts) which consumes more power than the inner lamp I (3 watts). Since the voltage across the resistor 10 is proportional to the total current flowing from the battery 12 to the lamps F, R, S and I, the voltage across the resistor 10 is smaller when the lamp F or R is disconnected than when none of the lamps F, R, S and I are disconnected. The voltage across the resistor 10 is dependent on the voltage across the battery 12 as well as on lamp failures, the variation in voltage in relation to the voltage change across the battery 12 being shown in Fig. 3. Characteristic curves $V_A$ and $V_B$ represent the voltages across the resistor 10 respectively in the absence of a malfunction of the lamps F or R and when a malfunction occurs.

Referring further to Fig. 2, the electronic circuit designed to be integrated into a semiconductor chip has a voltage regulator 5 which is connected across the battery 12 to supply the first and second comparators 1 and 2, the pulse generator 3 and the logic circuit 4 with a regulated constant voltage. The voltage regulator 5 comprises transistors 5b, 5c and 5d and a zener diode 5a connected in series with the emitter-collector path of the transistor 5b between the ground and a positive bus $I_1$ connected to the positive terminal of the battery 12. The base, emitter and collector of the transistor 5d are connected to the zener diode 5a, a negative bus $I_2$ and the ground, respectively, so that the negative bus $I_2$ is kept at a potential proportional to the potential on the positive bus $I_1$. Therefore, the voltage between the positive and negative buses $I_1$, and $I_2$ is regulated substantially at the (constant) breakdown voltage of the zener diode 5a.

The first comparator 1 comprises transistors 1a, 1b, 1c, 1d, 1e, 1f and 1g, and resistors 1h, 1i, 1j, 1k, 1l, 1m and 1n. The emitter-collector paths of the transistors 1a, 1c and 1e are connected in series between the positive and negative buses $I_1$ and $I_2$, whereas the emitter-collector paths of the transistors 1b, 1d and 1f are connected in series between the positive and negative buses $I_1$ and $I_2$. The bases of the transistors 1e and 1d are connected to each other and the bases of the transistors 1e and 1f are connected to each other. The base of the output transistor 1g is connected to the collector of the transistor 1f. The base of the input transistor 1a is connected to the junction between the relay 6 and the current detecting resistor 10 through the resistor 1h to receive the voltage appeared across the resistor 10. The base of the input transistor 1b is connected to the junction among the resistors 1k, 1l, 1m and 1n through the resistor 1j to receive the first reference voltage $V_1$ appearing across the resistor 1l. As shown in Fig. 3 the first reference voltage $V_1$ which is proportional to the voltage across the battery 12, is determined to be smaller than $V_A$ and larger than $V_B$.

The second comparator 2 comprises transistors 2a, 2b, 2c, 2d, 2e, 2f and 2g, and resistors 2h, 2i, 2j, 2k, 2l, 2m and 2n. The emitter-collector paths of the transistors 2a, 2c and 2f are connected in series between the positive and negative buses $I_1$ and $I_2$, whereas the emitter-collector paths of the transistors 2b, 2d and 2g are connected in series between the positive and negative buses $I_1$ and $I_2$. The bases of the transistors 2c and 2d are connected to each other, and the bases of the transistors 2f and 2g are connected to each other. The base of the output transistor 2e is connected to the collector of the transistor 2f. The base of the input transistor 2a is connected to the junction between the relay 6 and the current detecting resistor 10 through the resistor 2j to receive the voltage appearing across the resistor 10. The base of the input transistor 2b is connected to the junction between the resistors 2l and 2m through the resistor 2n to receive the second reference voltage $V_2$ appearing across the resistor 2l. As shown in Fig. 3, the second reference voltage $V_2$ which is not responsive to the voltage across the battery 12 is set to be much smaller than voltage $V_B$ and a little larger than zero voltage.

The pulse generator 3 comprises transistors 3a, 3b, 3c, 3d, 3e, 3f and 3g, a capacitor 3h, a diode 3i, and resistors 3j, 3k, 3l, 3m, 3n, 3p, 3q, 3r, 3s, 3t, 3u, 3v, 3w, and 3x. The base of the transistor 3c is connected to the junction between the resistors 3k and 3l to receive a reference voltage $V_0$ produced across the resistor 3k. The reference voltage $V_0$ is varied in response to the output voltage of the comparator 1 applied through the resistor 3j. The base of the transistor 3d is connected to the junction between the capacitor 3h and the resistor 3t through resistor 3s to receive the voltage across the capacitor 3h which is adapted to charge and discharge respectively when the transistor 3e is conducting (ON) and nonconducting (OFF). The base of the transistor 3e is connected through the resistor 3p to the collector of the transistor 3b to which the transistor 3f and 3g are connected. The bases of the transistors 3a and 3b connected to the respective transistors 3c and 3d are connected to the respective collectors of the transistors 3b and 3a. The base of the transistor 3b is connected to receive the output signal of the logic circuit 4.

The logic circuit 4 comprises transistors 4a and 4b, and resistors 4c, 4d, 4e and 4f. The base of the transistor 4a is connected to the positive bus $l_1$, through the resistor 4e and to the junction L between the relay 6 and the selecting switch 7 through the resistors 4d and 4f. The collector of the transistor 4a and the base of the transistor 4b are connected to receive the output signal of the second comparator 2. The collector of the output transistor 4b is connected to the pulse generator 3.

In the above described electronic circuits 1, 2, 3, 4 and 5 integrated into a semiconductor chip, the capacitor 3h and the resistors 3t and 4d are not integrated but connected outside the semiconductor chip from the standpoint of difficulty in integration.

When the selector switch 7 is open, electric current does not flow from the battery 12 to the directional lamp groups 8 and 9 through the current detecting resistor 10. With zero voltage across the resistor 10, the transistors 2a, 2c and 2e of the second comparator 2 are ON, and the transistors 2b, 2d and 2f are OFF. The transistor 4b of the logic circuit 4 is rendered ON in response to the low level voltage across the resistor 2i of the comparator 2. When the transistor 4b of the logic circuit 4 is ON, the transistors 3b, 3d, 3e, 3f and 3g of the pulse generator 3 are OFF, and the transistors 3a and 3c are ON. The transistor 3e being OFF prevents the capacitor 3h from charging and when transistors 3f and 3g are OFF the coil 6a is deenergised to keep open the normally-open switch 6b.

As soon as the selector switch 7 is closed to contact with either lamp group 8 or 9 in which no lamp is disconnected or otherwise, the junction L produces the low level voltage with the switch 6b still opening. In response to the low level voltage across, the lamp group 8 or 9, or at the junction L, the transistors 4a and 4b of the logic circuit 4 are ON and OFF, respectively, to switch ON the transistors 3b, 3d, 3e, 3f and 3g. When transistors 3f and 3g are ON the coil 6a energizes to close the normally-open switch 6b so that, the electric current flows from the battery 12 through the resistor 10 having the low resistance to allow the lamp group 8 or 9 to start flashing. When the electric current starts flowing through the lamp group 8 or 9, the voltage at the terminal L increases to switch OFF the transistor 4a of the logic circuit 4 which is liable to turn the transistor 4b ON. However, since the resistor 10 produces the voltage $V_A$ much larger than the second reference voltage $V_2$, the transistors 2b, 2d and 2f of the second comparator 2 go ON to make the transistor 2e go OFF which keeps OFF the transistor 4b of the logic circuit 4. As a result, the transistors 3b, 3d, 3e, 3f and 3g going ON in response to the closure of the selector switch 7 are prevented from being turned OFF in response to the closure of the switch 6b. At this time, the transistors 1b, 1d and 1g of the first comparator 1 are turned ON, and the transistors 1a, 1c and 1f are turned OFF.

When the transistors 3b, 3d, 3e, 3f and 3g of the pulse generator 3 are ON, the capacitor 3h charges through the resistors 3t and 3r and the transistor 3e to produce thereacross a charged voltage which exponentially increases. When the charged voltage applied to the transistor 3d reaches the large reference voltage $V_{OL}$ determined by the resistors 3k, 1l and 3j in response to the low level output voltage produced across the transistor 1g of the first comparator 1, the transistors 3a and 3c are turned ON to turn the transistors 3b, 3d, 3e, 3f and 3g OFF. The coil 6a thus deenergizes to open the switch 6b. As a result, the lamp group 8 or 9 through which the electric current does not flow stops flashing for a while. At this time the transistors 1a, 1c and 1f of the first comparator 1 are ON, and the transistors 1b, 1d and 1g are OFF. The transistors 2a, 2c and 2e of the second comparator 2 are turned ON in response to the opening of the switch 6b. The tendency for the transistor 4b of the logic circuit 4 to be turned ON is prevented by the transistor 4a being ON.

When the transistors 3b, 3d, 3e, 3f and 3g of the pulse generator 3 are OFF the capacitor 3h discharges through the resistor 3u to produce thereacross a discharge voltage which exponentially decreases. When the discharged voltage applied to the transistor 3d reaches the small reference voltage $V_{os}$ determined by the resistors 3j, 3k, 3l and 3m in response to the high level output voltage produced across the transistor 1g of the first comparator 1, the transistors 3b, 3d, 3e, 3f and 3g are turned ON to render the transistors 3a and 3c OFF. The coil 6a is responsively energized to close the switch 6b. As a result, the lamp group 8 or 9 through which the electric current flows starts flashing again.

As long as the selecting switch 7 is kept closed, the abovedescribed operation is repeated to allow the pulse generator 3 to generate a train of pulses which control the flashing of the lamp group 8 or 9. Since the capacitor 3b charges and discharges alternately at respective time constants, the pulses generated from the pulse generator 3 are kept at a constant frequency to enable the periodic flashings of the lamp group 8 or 9.

The frequency and duty cycle of periodic flashings of the lamp group 8 or 9 are increased and decreased, respectively, in the following manner, when either the front or rear lamp F or R is disconnected. Upon disconnection of either the front or rear lamp F or R, the voltage $V_B$ appeared across the resistor 10 becomes smaller than the reference voltage $V_1$ of the first comparator 1. Therefore, the transistors 1a, 1c and 1f are turned ON to turn OFF the transistors 1b, 1d and 1g.

The comparator 1 keeps applying the high level voltage produced across the transistor 1g to the pulses generator 3 in the same manner as in the case of opening of the switch 6b. The large reference voltage applied to the transistor 3c during the charging of the capacitor 3h is kept at $V_{0L}'$ smaller than $V_{0L}$, whereas the small reference voltage $V_{os}$ applied during the discharging of the capacitor 3h is kept at $V_{os}$. Since the charged voltage and the discharged voltage across the capacitor 3h are compared with respective voltages $V_{0L}'$ and $V_{os}$ which have smaller difference than the voltages $V_{0L}$ and $V_{os}$ have, the frequency and the duty cycle of the charging of the capacitor 3h are increased and decreased, respectively. As a result, the frequency and the duty cycle of the periodic pulses of the pulse generator 3 which energizes the relay 6 is increased and decreased, respectively. Changes in the flashing frequency are evident to an operator of the vehicle by observing the interior lamp I.

The second embodiment shown in Fig. 4 is adapted to cause the relay 6 to function as an alarm buzzer in response to the presence of disconnection in both front and rear lamps F and R. It should be noticed in Fig. 4 that the second comparator 2 receives the second reference voltage $V_2'$ produced from the first comparator 1 in which resistors 1p, 1q and 1r are connected in series between the positive bus $1_1$ and the ground through the transistor 5c of the voltage regulator 5. As shown in Fig. 5, the second reference voltage $V_2'$ produced across the resistor 1p is set to be smaller than the voltage $V_B$ and larger than a voltage $V_C$ across the resistor 10 in response to the disconnections of the front and rear lamps F and R. Otherwise the circuit of the second embodiment is the same as the first embodiment. Therefore, the same reference numerals are used in Fig. 4 to represent the common features.

In the second embodiment, when the disconnection is absent in both front and rear lamps F and R or the disconnection is present in either front or rear lamp F or R, the operation is the same as for the first embodiment. This is because the second reference voltage $V_2'$ is smaller than the voltages $V_A$ and $V_B$ as the second reference voltage $V_2$ has been in the first embodiment.

Operation of the second embodiment differs, when both front and rear lamps F and R are disconnected. When the selector switch 7 is closed to engage with either lamp group 8 or 9 in which both front and rear lamps F and R are disconnected, the voltage at the terminal L becomes low to turn ON and OFF respectively the transistors 4a and 4b of the logic circuit 4. As a result, the transistors 3b, 3d, 3e, 3f and 3g of the pulse generator 3 are turned ON to energize the relay coil 6a which responsively closes the normally-open switch 6b. As soon as the electric current starts flowing from the battery 12 to the lamp group 8 or 9, the resistor 10 produces the voltage $V_C$ corresponding to the disconnections of the front and rear lamps F and R. Since the voltage $V_C$ applied to the comparator 2 is smaller than the second reference voltage $V_2'$, the transistors 2a, 2c and 2e of the comparator 2 are turned ON to produce the low level voltage across the resistor 2i. In response to the closure of the switch 7b, the voltage at the terminal L increases to turn OFF the transistor 4a of the logic circuit 4. As a result, the transistor 4b of the logic circuit 4 is turned ON to turn OFF the transistors 3b, 3d, 3e, 3f and 3g of the pulse generator 3 which caused the relay coil 6a to deenergize opening the switch 6. Therefore, current is prevented from flowing from the battery 12 to the lamp group 8 or 9 immediately after the closure of the switch 6b. This operation is repeated at a very high frequency during the closure of the selector switch 7 so that the relay 6 in which the switch 6b opens and closes alternately, functions as an alarm buzzer to warn the vehicle operator of a disconnection or other malfunction of the lamps F and R.

It should be noted that even when the negative going noise signal is accidentally induced on the positive bus $1_1$ to decrease the voltage of the battery 12 to zero volts, the comparators 1 and 2, the pulse generator 3 and the logic circuit 4 is restored to its original operating conditions after the disappearance of the noise signals. Therefore, flashing of the lamp groups 8 or 9 ceases for only a short while and is restored immediately.

## Claims

1. Direction indicating apparatus for vehicles comprising two indicator lamp groups (8, 9) each being selectively connectable with an electrical power source (12) via a normally open switch (6), by a selector switch (7), a detector (10) for producing a detection output signal in proportion to the current flowing to a selected lamp group, a comparator (2) producing a comparison output signal when the detection output signal exceeds a predetermined reference signal lower than the detection output signal produced in the absence of malfunction in the selected lamp group, and a switch control (3) operable in response to a control signal indicative of closure of the selector switch, periodically to close the normally open switch characterised in that the said control signal is the output signal of a logic circuit (4) operable in response to the comparison output signal and a selector switch output signal.

2. Apparatus according to Claim 1 wherein the switch control comprises a pulse generator (3).

3. Apparatus according to Claim 1 or Claim 2 wherein the logic circuit (4) is adapted to produce the logic output signal when the comparison output signal is absent and the selector switch output signal indicates both closure of the selector switch and that the normally-open switch (6) is open and when the comparison output signal is present and the selector switch output signal indicates both closure of the selector switch (7) and that the normally-open switch (6) is closed.

4. Apparatus according to Claim 3, wherein the reference signal is larger than the detection output signal so that the logic circuit (4) produces the logic output signal in response to the selector switch output signal indicative of both closure of the selector switch (7) and that the normally open switch (6) is open, and wherein the normally-open switch (6) comprises a normally-open relay which acts as an alarm buzzer initiated by the switching control to warn of malfunction in both of the front and rear lamps.

5. Apparatus according to Claim 3 or 4 comprising a further comparator (1) producing a further comparison output signal when the detection output signal is less than other predetermined reference signal which is smaller than the detection output signal produced in the absence of a malfunction of the selected lamp group and larger than the detection output signal produced when such a malfunction occurs, and control means operable in response to the further comparison output signal to increase the frequency of periodic closure of the normally-open switch (6).

6. Apparatus according to any one of Claims 1 to 5 wherein means for generating the reference signals, the comparators (1, 2), the logic circuit (4) and the switch control (3) are integrated into semiconductor means and comprising a resistor (10) connected to the semiconductor means and through which the switch output signal is applied to the logic circuit.

## Revendications

1. Appareil indicateur de direction pour véhicules, comprenant deux groupes de lampes indicatrices (8, 9) se branchant chacun sélectivement à une source de courant électrique (12) par l'intermédiaire d'un commutateur normalement ouvert (6), d'un commutateur de sélection (7), et d'un détecteur (10) produisant un signal de sortie de détection proportionnel au courant arrivant à un groupe de lampes choisi; un comparateur (2) produisant un signal de sortie de comparaison lorsque le signal de sortie de détection dépasse un signal de référence prédéterminé inférieur au signal de sortie de détection produit en l'absence de défaillance dans le groupe de lampes choisi, et une commande de commutateur (3) fonctionnant en réponse à un signal de commande indiquant la fermeture du commutateur de sélection, de manière à fermer périodiquement le commutateur normalement ouvert, appareil caractérisé en ce que le signal de commande est le signal de sortie d'un circuit logique (4) fonctionnant en réponse au signal de sortie de comparaison et à un signal de sortie de commutateur de sélection.

2. Appareil selon la revendication 1, caractérisé en ce que la commande du commutateur est constituée par un générateur d'impulsions (3).

3. Appareil selon l'une des revendications 1 et 2, caractérisé en ce que le circuit logique (4) est conçu pour fournir le signal de sortie logique lorsque le signal de sortie de comparaison est absent et que le signal de sortie de commutateur de sélection indique à la fois la fermeture de commutateur de sélection et l'ouverture du commutateur normalement ouvert (6), et lorsque le signal de sortie de comparaison est présent et que le signal de sortie du commutateur de sélection indique à la fois la fermeture du commutateur de sélection (7) et la fermeture du commutateur normalement ouvert (6).

4. Appareil selon la revendication 3, caractérisé en ce que le signal de référence est plus grand que le signal de sortie de détection de sorte que le circuit logique (4) produit le signal de sortie logique en réponse au fait que le signal de sortie du commutateur de sélection indique à la fois la fermeture du commutateur de sélection (7) et l'ouverture du commutateur normalement ouvert (6), et en ce que le commutateur normalement ouvert (6) est constitué par un relais normalement ouvert fonctionnant en vibrateur d'alarme déclenché par la commande de commutation pmur prévenir le conducteur d'un défaut de fonctionnement des deux lampes avant et arrière.

5. Appareil selon l'uje quelconque des revendications 3 et 4, caractèrisé en ce qu'il comprend un autre comparateur (1) produisant un autre signal de sortie de comparaison lorsque le signal de sortie de détection est inférieur à un autre signal de référence prédéterminé inférieur au signal de sortie de détection produit en l'absence de défaillance du groupe de lampes choisi, et supérieur au signal de sortie de détection produit quand une défaillance se présente, et des moyens de commande fonctionannant en réponse à l'autre signal de sortie de comparaison pour augmenter la fréquence de fermeture périodique do commutateur normalement ouvert (6).

6. Appareil selon l'une quelconque des revendications 1 à 5, caractérisé en ce que les moyens de production des signaux de référence, les comparateurs (1, 2), le circuit logique (4) et la commande de commutateur (3), sont intégrés sur une pastille de semi-conducteur, et comprennent une résistance (10) branchée à cette pastille de semi-conducteur, le signal de sortie du commutateur étant appliqué au circuit logique par l'intermédiaire de cette résistance.

## Patentansprüche

1. Richtungs-Anzeigevorrichtung für Fahrzeuge, die zwei jeweils getrennt über einen normalerweise geöffneten Schalter (6) mittels eines Auswahlschalters (7) mit einer Stromquelle (12) verbindbare Gruppen von Anzeigelampen (8, 9), einen Überwachungsgeber (10) zur Erzeugung eines Überwachungs-Ausgangssignals in Abhängigkeit von dem durch eine gewählte Lampegruppe fließenden Stromes, einen Komparator (2) zur Erzeugung eines Komparator-Ausgangssignals, wenn das Überwachungs-Ausgangssignal größer als das-jenige kleinere Überwachungs-Ausgangssignal ist, wie es bei Nichtvorhandensein von Funktionsfehlern der gewählten Lampengruppe erzeugt wird, und eine Schaltersteuerung (3), die in Ansprechen auf ein Das Schließen des Auswahlschalters anzeigendes Steuersignal zum periodischen Schließen des normalerweise geöffneten Schalters betätigbar ist, dadurch gekennzeichnet, daß das Steuersignal das Ausgangssignal eines logischen Schaltungskreises (4) ist, der in Ansprechen auf das Komparator-Ausgangssignal und ein Ausgangssignal des Auswahlschalters betätigbar ist.

2. Vorrichtung nach Anspruch 1, dadurch gekennzeichnet, daß die Schaltersteuerung einen Impulsgenerator (3) aufweist.

3. Vorrichtung nach Anspruch 1 oder Anspruch 2, dadurch gekennzeichnet, daß der logische Schaltungskreis (4) dazu ausgebildet ist, das logische Ausgangssignal dann zu erzeugen, wenn bei fehlendem Komparator-Ausgangssignal das Ausgangssignal des Auswahlschalters geschlossenen Zustand des Auswahlschalters und geöffnetem Zustand des normalerweise geöffneten Schalters (6) anzeigt und wenn bei vorhandenem Komparator-Ausgangssignal das Ausgangssignal des Auswahlschalters geschlossenen Zustand des Auswahlschalters (7) und geschlossen Zustand des normalerweise geöffneten Schalters (6) anzeigt.

4. Vorrichtung nach Anspruch 3, dadurch gekennzeichnet, daß das Bezugssignal breiter als das Überwashungs-Ausgangssignal ist, sodaß der logische Schaltungskreis (4) das logische Ausgangssignal in Ansprechen auf das den geschlossenen Zustand des Auswahlschalters (7) und geöffneten Zustand des normalerweise geöffneten Schalters (6) anzeigende Ausgangssignal des Auswahlschalters erzeugt, und daß der normalerweise geöffnete Schalter (6) ein normalerweise geöffnetes, als Alarmsummer ausgebildetes Relais aufweist, das von der Schaltersteuerung zum Warnen von Funktionsfehlern in den vorderen und hinteren Lampen eingeschaltet wird.

5. Vorrichtung nach Anspruch 3 oder 4, dadurch gekennzeichnet, daß ein weiterer Komparator (1), der ein weiteres Komparator-Ausgangssignal erzeugt, wenn das Überwachungs-Ausgangssignal geringer als ein anderes, vorher festgelegtes Bezugssignal ist, das kleiner als das bei Nichtvorhandensein eines Funktionsfehlers der ausgewählten Lampengruppe erzeugte und größer als das bei Vorhandensein eines solchen Funktionsfehlers erzeugte Überwachungs-Ausgangssignal ist, und in Ansprechen auf dieses weitere Komparator-Ausgangssignal betätigbare Steueinrichtungen zur Frequenzerhöhung für das periodische Schließen des normalerweise geöffneten Schalters (6) vorgesehen sind.

6. Vorrichtung nach einem der Ansprüche 1 bis 5, dadurch gekennzeichnet, daß Einrichtungen zum Erzeugen eines Bezugssignals, die Komparatoren (1, 2), der logische Schaltungskreis (4) und die Schaltersteuerung (3) in eine Halbleiter-Einrichtung integriert sind und einen mit der Halbleiter-Einrichtung verbundenen elektrischen Widerstand (10) aufweisen, über den das Schalter-Ausgangssignal auf den logischen Schaltungskreis gelegt wird.

# FIG.1.

```
FIRST          PULSE          RELAY
COMPARATOR     GENERATOR
   1              3              6
          V1    2
SECOND         LOGIC
COMPARATOR     CIRCUIT
   2              4
   V2
```

```
      10
      11
      12
   7
 8     9
```

# FIG.3.

VOLTAGE (RESISTOR 10)

VA
V1
VB

V2

0   VOLTAGE (BATTERY 12)

# FIG.5.

VOLTAGE (RESISTOR 10)

VA
V1
VB
V2
VC

0   VOLTAGE (BATTERY 12)

Fig.2.

# FIG.4.

0 002 359